# EUROPÄISCHE PATENTANMELDUNG

(11) **EP 1 079 390 A2**
(43) Veröffentlichungstag der Anmeldung: **28.02.2001**
(21) Anmeldenummer: 00116545.5
(22) Anmeldetag: 01.08.2000
(51) Int. Cl.: G11B 33/04

(54) **Beleuchtetes Schränkchen zur Aufbewahrung von Datenträgerbehältern**

(30) Priorität: 27.08.1999 DE 29914998 U
(71) Anmelder: Deja GmbH, 51427 Bergisch Gladbach (DE)
(72) Erfinder: Deja-Borchard, Monika, 51491 Overath (DE)
(74) Vertreter: Langmaack, Jürgen, Dipl.-Ing.

(57) **Zusammenfassung**

Die Erfindung betrifft eine Aufbewahrungseinrichtung für Datenträgerbehälter (7), insbesondere für Compact Discs, Magnetbänder oder dergl., mit einem Fußteil (1), einem Ständerteil (2) mit mehreren parallelen Gefachen (6) für die Aufnahme jeweils eines Datenträgerbehälters (7) sowie einem Kopfteil (5), das eine durch die abgelegten Datenträgerbehälter (7) definierte Vorderebene (9) überragt, und mit wenigstens einer im vorderen Randbereich (10) des Kopfteils (5) angeordneten Leuchte (11), deren Lichtaustrittsöffnung (12) nach unten gerichtet ist.

## Beschreibung

Datenträger im weitesten Sinne, wie beispielsweise Compact-Discs, Magnetbänder oder dergl., werden üblicherweise in flachen Behältern aus Kunststoff, Karton oder dergl. abgelegt, die stapelbar aufbewahrt werden können. Die Datenträgerbehälter werden in Aufbewahrungseinrichtungen abgestellt, die übereinander und/oder nebeneinander angeordnete Ablagefächer aufweisen, die durch entsprechende Seitenwände begrenzt sind. Das Abstellen der Datenträgerbehälter kann hierbei sowohl in vertikaler als auch in horizontaler Ausrichtung erfolgen, wobei die Aufbewahrungseinrichtung die Form eines Regals, eines Schränkchens, einer Box oder auch eines schmalen Ständers aufweisen kann. Die Datenträgerbehälter weisen in der Regel an wenigstens einer Schmalseite ein Schriftfeld auf, so daß bei den in der Aufbewahrungseinrichtung abgestellten Behältern eine Identifizierung wie bei einem Buch möglich ist.

Insbesondere bei der Verwendung derartiger Aufbewahrungseinrichtungen für Datenträgerbehälter aus dem Phono- oder aus dem Videobereich erfolgt die Auswahl des jeweils abzuspielenden Datenträgers vielfach in einem nur spärlich beleuchteten Raum, so daß jeweils für die Auswahl die volle Raumbeleuchtung eingeschaltet werden muß.

Der Erfindung liegt nun die Aufgabe zugrunde, eine Aufbewahrungseinrichtung der vorstehend bezeichneten Art zu schaffen, durch die der geschilderte Nachteil in der Handhabung vermieden wird.

Diese Aufgabe wird gelöst durch ein Schränkchen zur Aufbewahrung von Datenträgerbehältern, insbesondere Compact-Discs, Magnetbänder oder dergl., mit einem Fußteil, einem Ständerteil mit mehreren parallelen Gefachen für die Aufnahme jeweils eines Datenträgerbehälters sowie mit einem Kopfteil, das eine durch die abgelegten Datenträgerbehälter definierte Vorderebene überragt, und mit wenigstens einer im vorderen Randbereich des Kopfteils angeordneten Leuchte, deren Lichtaustrittsöffnungen nach unten gerichtet ist. Bei einem derartigen Schränkchen, das je nach Breitenabmessung eine oder mehrere nur der Vorderebene zugeordnete Leuchten aufweist, wird ausschließlich der Bereich der Vorderebene beleuchtet, so daß auch im abgedunkelten Raum der jeweils gewünschte Datenträger ausgewählt und herausgenommen werden kann. Die Lichtstärke und/oder die Lichtfarbe des elektrischen Leuchtmittels der Leuchte kann hierbei so ausgewählt werden, daß die Schriftfelder auf den Datenträgerbehältern nicht überstrahlt werden sondern problemlos abgelesen werden können. Durch die gezielt gegen die Vorderebene und nur nach unten strahlende Ausrichtung der Leuchte ist eine Blendwirkung zum Raum hin vermieden. Als Leuchtmittel für die Leuchte wird bevorzugt eine Niedervolt-Halogen-Lampe verwendet. Derartige Halogen-Lampen werden in der Regel als sogenannte "Halogen-Brenner" vorkonfektioniert mit Reflektor und einer die Lichtaustrittsöffnung überdeckenden Frontscheibe mit unterschiedlichen Strahlwinkeln angeboten.

Der Ständerteil kann mit geschlossener Rückwand und geschlossenen Seitenwänden oder aber auch regalartig ausgebildet sein. Um die abgelegten Datenträgerbehälter vor Staub zu schützen, wird die Ausbildung mit geschlossener Rückwand und geschlossenen Seitenwänden bevorzugt und zusätzlich noch ein Abschluß der Frontöffnung bevorzugt. Dieser Abschluß kann durch ein sogenanntes Rollo oder aber auch durch eine Tür gebildet sein.

Das Schränkchen kann bei horizontal ausgerichteten Gefachen die einfache oder die mehrfache Breite einer Behälterbreite aufweisen. Bei einer vertikalen Ausrichtung der Gefache ist es möglich, jede beliebige und ästhetisch ansprechende Proportion bei Höhe und Breite für das Schränkchen vorzusehen, wobei jedoch die Höhe entsprechend einem Mehrfachen der Breite der Datenträgerbehälter entspricht. Entsprechend der Breite des Schränkchens und unter Berücksichtigung des zur Verfügung stehenden Strahlwinkels des Halogen-Brenners sind dann ein oder mehrere derartiger Leuchten anzuordnen.

Wegen der geringen Bauhöhe der Halogen-Brenner ist es möglich, den Kopfteil in seiner Dicke so zu wählen, daß der Brenner vollständig verdeckt in einer entsprechenden Ausnehmung des Kopfteils angeordnet werden kann, so daß die Lichtaustrittsöffnung bündig mit der die Vorderebene überragenden Unterfläche abschließt, so daß bei einem türartigen Abschluß der erforderliche Freiraum zum Öffnen und Schließen des türartigen Abschlusses zur Verfügung steht.

Die Erfindung wird anhand schematischer Zeichnungen von Ausführungsbeispielen näher erläutert. Es zeigen:
- Fig. 1: einen Seitenansicht eines Schränkchens,
- Fig. 2: eine Frontansicht des Schränkchens gem. Fig. 1,
- Fig. 3: eine abgewandelte Ausführungsform.

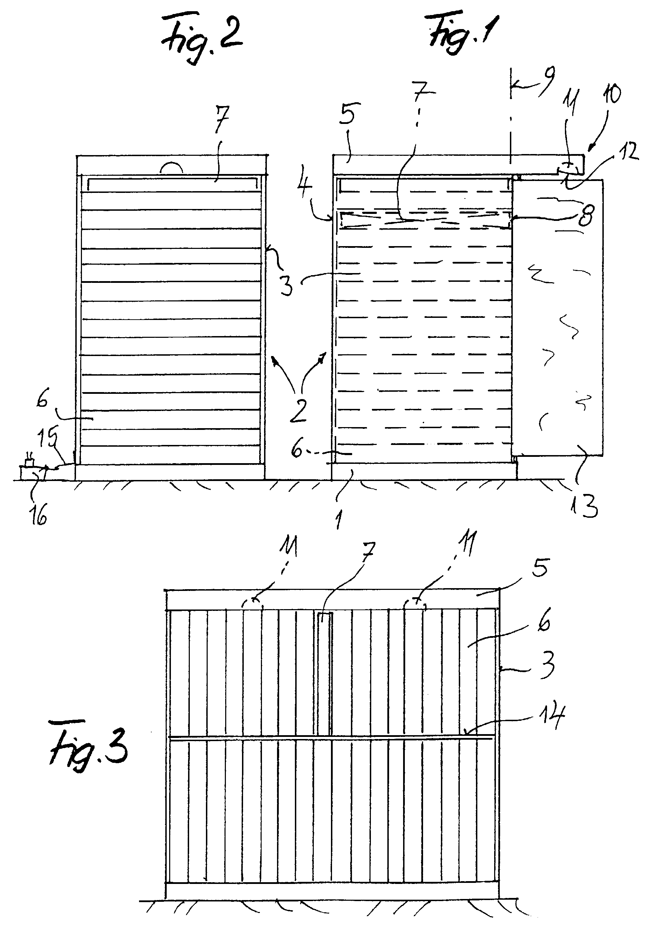

Das in Fig. 1 dargestellte Ausführungsbeispiel in Form eines Schränkchens weist einen Fußteil 1 in Form einer Bodenplatte auf, mit dem als Ständerteil zwei Seitenwände 3 und eine Rückenwand 4 fest verbunden sind. Der obere Abschluß wird durch ein Kopfteil 5 gebildet. Zwischen den beiden Seitenwänden 3 ist eine Vielzahl von horizontal ausgerichteten Gefachen 6 angeordnet, die in Höhe, Breite und Tiefe auf die Abmessungen eines abzulegenden Datenträgerbehälters 7 für einen scheibenförmigen Datenträger, beispielweise einer Compact Disc abgestimmt sind. Durch die abgelegten Datenträgerbehälter 7, die an ihrer nach außen weisenden Stirnfläche 8 mit einem Schriftfeld versehen sind, wird eine Vorderebene 9 definiert.

Das Kopfteil 5 ist nun so bemessen, daß es die Vorderebene 9 um ein gewisses Maß überragt. Das Kopfteil 5 kann hierbei kastenförmig hohl oder auch als massive Platte gefertigt sein.

Im Randbereich 10 des überragenden Teils des Kopfteils 5 ist eine Leuchte 11 angeordnet, deren Lichtaustrittsöffnung 12 nach unten gerichtet ist. Als Leuchte wird zweckmäßigerweise ein sogenannter Halogen-Brenner eingesetzt, d. h. eine Halogen-Niedervolt-Lampe mit integriertem Reflektor. Zweckmäßigerweise wird hier ein Halogen-Brenner mit weiten Strahlwinkel eingesetzt. Entsprechend dem Strahlwinkel des verwendeten Halogen-Brenners 12 ist nun auch das Maß vorgegeben, um das der Kopfteil 5 die Vorderebene 9 überragt, damit die Schriftfelder auf den Stirnflächen 8 der abgelegten Datenträgerbehälter 7 angestrahlt werden.

Bei der geringen Bauhöhe derartiger Halogen-Brenner kann das Kopfteil 5 kastenförmig als Hohlkörper oder auch massiv mit einer entsprechenden Ausnehmung gefertigt werden, so daß bei entsprechender Dicke des Kopfteils 5 die Leuchte 11 vollständig in den Kopfteil 5 integriert ist und eine glatte Unterfläche des die Vorderebene 9 überragenden Bereichs gegeben ist. Damit ist auch die Möglichkeit gegeben, die Vorderebene mit einem Abschluß, beispielsweise einer Tür 13, zu versehen, die im Fußteil 1 und im Kopfteil 5 oder aber an einer der Seitenwände 3 angelenkt ist. Die Tür 13 kann aus einem durchsichtigen Material, beispielsweise Glas oder auch Kunststoff hergestellt sein, so daß auch bei geschlossener Tür die Schriftfelder der abgelegten Datenträgerbehälter sichtbar sind.

In Fig. 2 ist die Vorderansicht des Schränkchens gem. Fig. 1 zu erkennen. Hieraus ist ohne weiteres abzuleiten, daß in einer Baueinheit auch zwei "Säulen" von Gefachen 6 nebeneinander in einem als Baueinheit ausgebildeten Schränkchen vorgesehen werden können, wobei dann zweckmäßigerweise zwei gegeneinander verschwenkbare Türen 13 vorzusehen sind. Entsprechend der größeren Breite sind dann auch wenigstens zwei Leuchten 11 nebeneinander am Kopfteil 5 vorzusehen.

Fig. 3 zeigt eine Ausführungsform, bei der zwischen den beiden Seitenwänden 3 des Ständerteils 2 ein Zwischenboden 14 angeordnet ist, so daß unterhalb und oberhalb des Zwischenbodens 14 senkrecht ausgerichtete Gefache vorgesehen werden können, in die die Datenträgerbehälter 7 entsprechend senkrecht eingeschoben werden können. Bei dieser Anordnung ist man hinsichtlich der Breite des herzustellenden Schränkchens nicht auf das durch die auszubewahrenden Kassetten vorgegebene Rastermaß angewiesen sondern man kann hier die Breite auch unter Berücksichtigung von gestalterischen Gesichtspunkten beliebig wählen. Lediglich bei der Bemessung der Höhe ist man an dieses Rastermaß gebunden.

Bei dem in Fig. 3 dargestellten Ausführungsbeispiel sind bei entsprechend größerer Breite im Kopfteil 5 zwei Leuchten 11 nebeneinander angeordnet.

Die Leuchten 11 sind durch ein an der Rückwand 4 nach unten geführtes Kabel 15 über einen als Stecker ausgebildeten Trafo 16 an eine Stromversorgung anschließbar.

## Patentansprüche

1. Aufbewahrungseinrichtung für Datenträgerbehälter (7), insbesondere für Compact Discs, Magnetbänder oder dergl., mit einem Fußteil (1), einem Ständerteil (2) mit mehreren parallelen Gefachen (6) für die Aufnahme jeweils eines Datenträgerbehälters (7) sowie einem Kopfteil (5), das eine durch die abgelegten Datenträgerbehälter (7) definierte Vorderebene (9) überragt, und mit wenigstens einer im vorderen Randbereich (10) des Kopfteils (5) angeordneten Leuchte (11), deren Lichtaustrittsöffnung (12) nach unten gerichtet ist.

2. Aufbewahrungseinrichtung nach Anspruch 1, dadurch gekennzeichnet, daß das Kopfteil (5) plattenförmig ausgebildet ist.

3. Aufbewahrungseinrichtung nach Anspruch 1 oder 2, dadurch gekennzeichnet, daß die Leuchte (11) durch eine Niedervolt-Halogen-Lampe gebildet wird.

4. Aufbewahrungseinrichtung nach einem der Ansprüche 1 bis 3, dadurch gekennzeichnet, daß die Dicke des Kopfteils (5) der Bauhöhe der Leuchte (11) entspricht.

5. Aufbewahrungseinrichtung nach einem der Ansprüche 1 bis 4, dadurch gekennzeichnet, daß vor der Vorderebene (9) ein Abschluß (13) in Form einer Tür, eines Rollos oder dergl. angeordnet ist.

6. Aufbewahrungseinrichtung nach einem der Ansprüche 1 bis 5, dadurch gekennzeichnet, daß die Gefache (6) horizontal ausgerichtet übereinander angeordnet sind.

7. Aufbewahrungseinrichtung nach einem der Ansprüche 1 bis 5, dadurch gekennzeichnet, daß die Gefache (6) vertikal ausgerichtet nebeneinander ausgerichtet sind.
